# EUROPÄISCHE PATENTSCHRIFT

(11) **EP 4 124 915 B1**
(45) Veröffentlichungstag und Bekanntmachung des Hinweises auf die Patenterteilung: **19.08.2026**
(21) Anmeldenummer: 21209965.9
(22) Anmeldetag: 23.11.2021
(51) Int. Cl.: G05B 17/02, G06N 20/10, G06N 3/09

(54) **COMPUTERIMPLEMENTIERTES VERFAHREN ZUR HERSTELLUNG EINES FÜR EINE NUMERISCHE SIMULATION GEEIGNETEN SOFTWARE-ABBILDES ZUMINDEST EINES TEILS EINES REALEN STEUERGERÄTS**
COMPUTER-IMPLEMENTED METHOD FOR PRODUCING A SOFTWARE IMAGE OF AT LEAST PART OF A REAL CONTROLLER SUITABLE FOR A NUMERICAL SIMULATION
PROCÉDÉ ASSISTÉ PAR ORDINATEUR DE PRODUCTION D'UNE IMAGE LOGICIELLE ADAPTÉE À UNE SIMULATION NUMÉRIQUE D'AU MOINS UNE PARTIE D'UN APPAREIL DE COMMANDE RÉEL

(30) Priorität: 30.07.2021 DE 102021119818
(43) Veröffentlichungstag der Anmeldung: 01.02.2023
(73) Patentinhaber: dSPACE SE & Co. KG, 33102 Paderborn (DE)
(72) Erfinder: Nolde, Christian, 33102 Paderborn (DE); Guggemos, Tobias, 33102 Paderborn (DE); FRIEDRICH, Markus, 33102 Paderborn (DE)

(56) Entgegenhaltungen:
- WO-A1-2019/125519
- DE-A1- 102019 122 790

## Beschreibung

Die Erfindung betrifft ein computerimplementiertes Verfahren zur Herstellung eines für eine numerische Simulation geeigneten Software-Abbildes zumindest eines Teils eines realen Steuergeräts, wobei das reale Steuergerät im Betrieb einen Eingangsvektor von Steuergerät-Eingangsgrößen auf einem Ausgangsvektor von Steuergerät-Ausgangsgrößen abbildet. Darüber hinaus betrifft die Erfindung ein Computerprogramm mit Anweisungen, die, wenn sie mit einem Computer zum Training eines künstlichen neuronalen Netzwerks oder einer Support-Vector-Maschine ausgeführt werden, den Computer veranlassen, dass vorgeschriebene Verfahren auszuführen.

Verfahren der vorbeschriebenen Art werden im Bereich der Steuergeräteentwicklung eingesetzt, genauer im Bereich der Entwicklung und des Tests von Software für Steuergeräte. Bei Steuergeräten handelt es sich um Kleinrechner mit einer I/O-Schnittstelle, wobei das Steuergerät über diese I/O-Schnittstelle mit einem technisch-physikalischen Prozess in Wirkverbindung steht, von diesem Prozess beispielsweise Informationen in Form von Sensor-Messdaten aufnimmt und auf den Prozess durch Ausgabe von Aktor-Signalen wieder einwirkt. In dem Steuergerät findet eine Signalverarbeitung statt, die Steuergerät-Eingangsgrößen werden aufbereitet, analysiert, zum Beispiel durch einen regelungstechnischen Algorithmus weiterverarbeitet, und entsprechende berechnete Größen werden dann als Steuergerät-Ausgangsgrößen über die I/O-Schnittstelle wieder ausgegeben. Die Anwendungsfelder sind vielfältig, sie liegen beispielsweise im automotiven Bereich, in der Luft- und Raumfahrt und ganz allgemein in industriellen Anwendungen, wie beispielsweise der Prozessindustrie. Die Steuergerät-Eingangsgrößen und die Steuergerät-Ausgangsgrößen können in ganz unterschiedlicher Form vorliegen. Es kann sich um analoge Signale (zum Beispiel 4 bis 20 mA-Schnittstelle) oder digitale Signale (zum Beisiel PWM-Signale), modulierte Signale und auch komplexe Signale handeln, wie beispielsweise die auf einem Bus-Protokoll basierenden Nachrichten eines Feldbusses (zum Beispiel CAN, FlexRay usw.). Die Signale können auch in unterschiedlicher physikalischer Form vorliegen, beispielsweise als elektrische Signale (Strom, Spannung), als elektromagnetische Signale in Form von Funkwellen oder auch als optische Signale, was jedoch weniger verbreitet ist; im Einzelnen kommt es darauf jedoch nicht an.

Die Softwareentwicklung für Steuergeräte wird im sogenannten V-Zyklus abgebildet. Im V-Zyklus werden verschiedene Entwicklungsstationen durchlaufen, beginnend bei einem abstrakten Funktionstest beispielsweise eines Regelungsalgorithmus ohne jeden Bezug zur späteren Steuergerät-Hardware (Model-in-the-Loop), über den Test eines Programmcodes für das später zum Einsatz kommenden Serien-Steuergerät, wobei jedoch das Serien-Steuergerät nicht vorliegt, sondern nur in Software abgebildet ist als virtuelles Steuergerät (Software-in-the-Loop, SIL), über den Test des physikalisch vorhandenen Serien-Steuergeräts mit dem Serien-Steuergerät Programmcode in einer ganz oder teilweise simulierten Umgebung (Hardware-in-the-Loop, HIL) bis schließlich zum Test des Serien-Steuergeräts in der tatsächlichen physikalischen Umgebung. Beim Hardware-in-the-Loop-Test (HIL-Test) steht das zu testende Serien-Steuergerät über seine I/O-Schnittstelle (oder ggf. auch nur einen Teil seiner I/O-Schnittstelle) mit einem HIL-Simulator in Verbindung, wobei auf dem HIL-Simulator die Umgebung des Steuergeräts (zumindest teilweise) simuliert wird. Wenn es sich bei dem Steuergerät beispielsweise um ein Motor-Steuergerät handelt, dann wird auf dem HIL-Simulator entsprechend der anzusteuernde Motor simuliert und ggf. auch noch umfangreichere Umgebungsbestandteile, wie beispielsweise Antriebsstrang, Fahrwerk bis hin zur Durchführung von 3D-Simulationen von Straßenszenen. Die Umgebung des zu testenden Steuergeräts muss nicht vollständig in dem HIL-Simulator simuliert werden, teilweise können Bestandteile der Umgebung auch physikalisch vorliegen, wie beispielsweise in Form von anderen Steuergeräten in einem Steuergerät-Verbund.

Auch beim Software-in-the-Loop-Test kann es vorkommen, dass das zu testende virtuelle Steuergerät mit anderen Steuergeräten interagiert, sodass die Funktionalität dieser anderen, peripheren Steuergeräte ebenfalls abgebildet werden muss, um einen sinnvollen Test des virtuellen Steuergeräts durchführen zu können.

Aus dem Stand der Technik bekannt sind Verfahren zur Herstellung eines Software-Abbildes für eine Logik-Controller mittels eines trainierten Modells, z.B. in der Offenlegung zur Patent-Anmeldung WO2019125519A1. Ebenso bekannt sind Verfahren bei denen neuronale Netze mittels einer Simulation trainierte werden, um Systeme zu steuern. Ein entsprechendes Beispiel der Steuerung einer Roboterarmes ist im Stand der Technik in der Offenlegung zur Patent-Anmeldung DE102019122790A1 dargestellt. Aufgabe der vorliegenden Erfindung ist es, unter anderem für die aufgezeigten Anwendungsfälle ein Verfahren anzugeben, mit dem es möglich ist, für den Fall eines vorhandenen realen Steuergeräts, ein Software-Abbild zumindest eines Teils dieses realen Steuergeräts anzugeben, wobei es möglich ist, mit diesem Software-Abbild eine numerische Simulation des realen Steuergeräts durchzuführen. Die Erfindung ist in den Ansprüchen definiert.

Das erfindungsgemäße Verfahren, mit dem die zuvor hergeleitete und aufgezeigte Aufgabe gelöst wird, zeichnet sich zunächst dadurch aus, dass das Software-Abbild im Rahmen einer numerischen Simulation die Funktionalität des realen Steuergeräts abbildet, wobei das Software-Abbild durch ein künstliches neuronales Netzwerk oder durch eine Support-Vector-Machine gebildet wird, wobei das Software-Abbild einen Eingangsvektor von zweiten Abbild-Eingangsgrößen und einen Ausgangsvektor von zweiten Abbild-Ausgangsgrößen umfasst, wobei der Eingangsvektor von ersten Steuergerät-Eingangsgrößen dritte Steuergerät-Eingangsgrößen umfasst, die als zweite Abbild-Eingangsgrößen verwendet werden, und der Ausgangsvektor von ersten Steuergerät-Ausgangsgrößen dritte Steuergerät-Ausgangsgrößen umfasst, die als zweite Abbild-Ausgangsgrößen verwendet werden, wobei das Software-Abbild mittels überwachten Lernens oder mittels bestärkenden Lernens trainiert wird mit einer Mehrzahl von Trainings-Eingangsvektoren der dritten Steuergerät-Eingangsgrößen und mit einer Mehrzahl von korrespondierenden Trainings-Ausgangsvektoren der dritten Steuergerät-Ausgangsgrößen, wobei die Trainings-Eingangsvektoren und die korrespondierenden Trainings-Ausgangsvektoren aus den ersten Steuergerät-Eingangsgrößen und den ersten Steuergerät-Ausgangsgrößen während des realen Betriebs des realen Steuergeräts erzeugt werden, dadurch gekennzeichnet, dass das Software-Abbild mittels überwachten Lernens oder mittels bestärkenden Lernens während des Betriebs des realen Steuergeräts trainiert wird mit während dieses Betriebs des realen Steuergeräts gewonnener Trainings-Eingangsvektoren und korrespondierender Trainings-Ausgangsvektoren und dass erst dann ein neues Paar von Eingangsvektor von ersten Steuergerät-Eingangsgrößen und Ausgangsvektor von ersten Steuergerät-Ausgangsgrößen als Trainings-Eingangsvektor und korrespondierender Trainings-Ausgangsvektor für das Training des Software-Abbildes herangezogen wird, wenn das Training des Software-Abbildes mit dem letzten Paar für das Training herangezogenem Trainings-Eingangsvektor und korrespondierendem Trainings-Ausgangsvektor beendet ist und zwischenzeitlich angefallene Paare von Eingangsvektor von ersten Steuergerät-Eingangsgrößen und Ausgangsvektor von ersten Steuergerät-Ausgangsgrößen fallengelassen werden.

Erfindungsgemäß ist weiterhin vorgesehen, dass das Software-Abbild mittels überwachten Lernens oder mittels bestärkenden Lernens trainiert wird mit einer Mehrzahl von Trainings-Eingangsvektoren der interessierenden Steuergerät-Eingangsgrößen und im Fall des überwachten Lernens auch mit einer Mehrzahl von korrespondieren Trainings-Ausgangsvektoren der interessierenden Steuergerät-Ausgangsgrößen. Voraussetzungsgemäß besteht die Funktionalität des realen Steuergeräts darin, einen Eingangsvektor von Steuergerät-Eingangsgrößen auf einen Ausgangsvektor von Steuergerät-Ausgangsgrößen abzubilden, die Steuergerät-Ausgangsgrößen hängen also in irgendeiner Art und Weise von den Steuergerät-Eingangsgrößen ab. Es handelt sich hier also um ein typisches Regressionsproblem.

Im Falle des bestärkenden Lernens muss ein Trainings-Ausgangsvektor nicht zwingend erfasst und verwendet werden, gleichwohl könnte er erfasst und verwendet werden. Die Qualität des von dem Software-Abbild ausgegebenen Ausgangsvektors muss im Falle des bestärkenden Lernens nicht durch einen Soll-Ist-Vergleich von berechneten und erwarteten Ausgangsgrößen erfolgen, sondern kann anderweitig beurteilt werden. Dazu kann ein Trainings-Ausgangsvektor verwendet werden, muss aber nicht verwendet werden. Beim überwachten Lernen ist die Erfassung und die Verwendung des Trainings-Ausgangsvektors obligatorisch. Mit diesem Verständnis sind die nachfolgenden Ausführungen zu verstehen, in denen nicht ständig eine Fallunterscheidung gemacht wird, ob nun überwachtes oder bestärkendes Lernen zur Anwendung kommt. Wenn bestärkendes Lernen verwendet werden soll, ist ein Trainings-Ausgangsvektor nicht obligatorisch.

Zum Trainieren des Software-Abbildes werden die Trainings-Eingangsvektoren und die korrespondierenden Trainings-Ausgangsvektoren aus dem Betrieb des realen Steuergeräts gewonnen, also aus den Steuergerät-Eingangsgrößen und den Steuergerät-Ausgangsgrößen. Die Trainings-Eingangsvektoren und die korrespondierenden Trainings-Ausgangsvektoren sind "fehlerfrei", da sie ja aus dem Betrieb des realen Steuergeräts entstammen. Die so gewonnenen Paare von Trainings-Eingangsvektoren und korrespondieren Trainings-Ausgangsvektoren eignen sich sowohl zum Training des künstlichen neuronalen Netzwerks oder der Support-Vector-Maschine wie auch zur Validierung des Abbildungsverhaltens des Software-Abbildes in Form des künstlichen neuronalen Netzwerkes bzw. der Support-Vector-Maschine. Das Software-Abbild des realen Steuergeräts kann also auch als Verhaltensabbild verstanden werden.

Das überwachte Lernen besteht darin, dass die im Rahmen des Lernvorgangs einzustellenden freien Parameter des Software-Abbildes durch Maximieren einer Gütefunktion bzw. durch Minimieren einer Fehlerfunktion optimiert werden, nämlich durch fortwährenden Vergleich des durch das Software-Abbild berechneten Ausgangsvektors von Abbild-Ausgangsgrößen mit dem tatsächlichen Ausgangsvektor der interessierenden Steuergerät-Ausgangsgrößen. Beim bestärkenden Lernen wird fortwährend eine Qualität des durch das Software-Abbild berechneten Ausgangsvektors von Abbild-Ausgangsgrößen bestimmt und optimiert, was nicht zwingend unter Verwendung eines Trainings-Ausgangsvektors geschehen muss.

Durch das vorgeschlagene Verfahren ist es möglich, ein Software-Abbild eines realen Steuergeräts herzustellen, das dann im Rahmen anderer numerischer Simulation verwendet werden kann. Dadurch ist es beispielsweise möglich, das Verhalten des realen Steuergeräts im interessierenden Bereich softwaremäßig abzubilden und eine Vielzahl dieser Software-Abbilder beispielsweise in parallelen HIL-Simulationen zu verwenden oder auch im Rahmen von Software-in-the-Loop-Simulationen, in denen beteiligte periphere Steuergeräte durch ein solches Software-Abbild in die Simulation integriert werden können. Dies hat enorme Vorteile - rein technisch, aber auch hinsichtlich der entstehenden Kosten -, da die Abhängigkeit von der Existenz einer Mehrzahl an realen Steuergeräten entfällt - es muss nur ein einziges vorliegen, dessen Funktionalität in dem Software-Abbild imitiert wird.

Gemäß einer bevorzugten Ausgestaltung des Verfahrens ist vorgesehen, dass während des Betriebs des realen Steuergeräts trainiert wird mit während dieses Betriebs des realen Steuergeräts gewonnener Trainings-Eingangsvektoren und im Falle des überwachten Lernens auch korrespondierender Trainings-Ausgangsvektoren. Hier handelt es sich um den "online"-Fall, bei dem also die aktuell vorliegenden und generierten Steuergerät-Eingangsgrößen und korrespondierende Steuergerät-Ausgangsgrößen als Trainings-Eingangsvektoren und korrespondierende Trainings-Ausgangsvektoren verwendet werden. Diese können gewonnen werden im Anwendungsfall des im realen physikalischen Prozess verbauten realen Steuergeräts, vorzugsweise findet der Betrieb des realen Steuergeräts jedoch im Rahmen einer Hardware-in-the-Loop-Simulation statt.

Viele reale Steuergeräte arbeiten als zeitdeterministische Abtastsysteme, häufig mit Abtastraten im Millisekunden- oder auch im Mikrosekunden-Bereich. Auch wenn die Steuergerät-Eingangsgrößen nicht mit einer festen Rate aufgenommen und verarbeitet werden und die Steuergerät-Ausgangsgrößen nicht mit einer festen Rate berechnet und ausgegeben werden, das Steuergerät also beispielsweise ereignisgetrieben arbeitet, kann es sein, dass das Software-Abbild nicht in der Geschwindigkeit mit neuen Trainings-Eingangsvektoren und korrespondierenden Trainings-Ausgangsvektoren trainiert werden kann, mit der diese Trainings-Vektoren anfallen. Deshalb ist bei einer weiteren vorteilhaften Ausgestaltung des Verfahrens vorgesehen, dass erst dann ein neues Paar von Eingangsvektor von Steuergerät-Eingangsgrößen und Ausgangsvektor von Steuergerät-Ausgangsgrößen als Trainings-Eingangsvektor und korrespondierender Trainings-Ausgangsvektor für das Training des Software-Abbildes herangezogen wird, wenn das Training des Software-Abbildes mit dem letzten Paar für das Training herangezogenem Trainings-Eingangsvektor und korrespondierendem Trainings-Ausgangsvektor beendet ist. Das bedeutet, dass zwischenzeitlich angefallene Paare von Eingangsvektor von Steuergerät-Eingangsgrößen und Ausgangsvektor von Steuergerät-Ausgangsgrößen fallen gelassen werden.

Eine weitere bevorzugte Ausgestaltung des Verfahrens zeichnet sich dadurch aus, dass eine Mehrzahl von Paaren von Eingangsvektor von ersten Steuergerät-Eingangsgrößen und korrespondierendem Ausgangsvektor von ersten Steuergerät-Ausgangsgrößen während des Betriebs des realen Steuergeräts aufgezeichnet werden und das Training des Software-Abbildes unabhängig vom Betrieb des realen Steuergeräts erfolgt mit Paaren von Trainings-Eingangsvektor und korrespondierendem Trainings-Ausgangsvektor, die aus den aufgezeichneten Paaren von Eingangsvektor von ersten Steuergerät-Eingangsgrößen und korrespondierendem Ausgangsvektor von ersten Steuergerät-Ausgangsgrößen gewonnen werden. Hierbei handelt es sich also um den "offline"-Fall des Trainings des Software-Abbildes.

Die Verwendung von aufgezeichneten Paaren von Eingangsvektor von Steuergerät-Eingangsgrößen und korrespondierendem Ausgangsvektor von Steuer-Ausgangsgrößen hat verschiedene Vorteile. Beispielsweise ist es möglich, mit einem identischen Trainings-Datensatz verschiedene Software-Abbilder auf Grundlage verschiedener künstlicher neuronaler Netzwerke oder verschiedener Support-Vector-Machines zu trainieren, beispielsweise auch zeitgleich zu trainieren, um später eine Auswahl des besten Software-Abbildes zu treffen. Gleichzeitig ist das Training des Software-Abbildes nicht mehr abhängig von der Erzeugungsrate von Trainings-Eingangsvektoren und korrespondierenden Trainings-Ausgangsvektoren, das Training kann, je nach Möglichkeit, schneller oder auch langsamer erfolgen.

Unabhängig vom Vorliegen des "online"-Falls oder des "offline"-Falls ist bei einer bevorzugten Ausgestaltung des Verfahrens vorgesehen, dass das Training des Software-Abbildes des realen Steuergeräts mit Paaren von Trainings-Eingangsvektor und korrespondierendem Trainings-Ausgangsvektor erfolgt, die aus zeitlich äquidistanten, aufeinander folgenden Paaren von Eingangsvektor von Steuergerät-Eingangsgrößen und korrespondierendem Ausgangsvektor von Steuergerät-Ausgangsgrößen gewonnen werden. Besonders bevorzugt erfolgt das Training mit einer Reihe von mehreren Paaren von Trainings-Eingangsvektor und korrespondierendem Trainings-Ausgangsvektor, die aus zeitlich lückenlos aufeinander folgenden Paaren von Eingangsvektor von Steuergerät-Eingangsgrößen und korrespondierendem Ausgangsvektor von Steuergerät-Ausgangsgrößen gewonnen werden. Im "online"-Fall hängt es von der Abtastrate des realen Steuergeräts ab und der maximalen Trainingsgeschwindigkeit des Software-Abbildes, ob diese Vorgabe erfüllbar ist.

Gemäß weiteren bevorzugten Ausgestaltungen des Verfahrens ist realisiert, dass die aus dem Betrieb des realen Steuergeräts gewonnenen Trainings-Eingangsvektoren und die korrespondierenden Trainings-Ausgangsvektoren in einem Auswahlschritt auf Grundlage eines Auswahlkriteriums für das Training des Software-Abbildes zugelassen oder verworfen werden. Das Auswahlkriterium könnte in einem vorgegebenen Wertebereich für zumindest einen Teil der interessierenden Steuergerät-Eingangsgrößen und/oder einen Teil der interessierenden Steuergerät-Ausgangsgrößen bestehen. Dadurch kann beispielsweise beeinflusst werden, ob randwertige Steuergerät-Eingangsgrößen oder Steuergerät-Ausgangsgrößen bei dem Training berücksichtigt werden.

Eine andere Methode zur Beeinflussung des Trainings des Software-Abbildes besteht bei einer vorteilhaften Ausgestaltung des Verfahrens darin, dass der Betrieb des realen Steuergeräts zur Gewinnung der Trainings-Eingangsvektoren und der korrespondierenden Trainings-Ausgangsvektoren so durchgeführt wird, dass zumindest ein Teil der Steuergerät-Eingangsgrößen und zumindest einen Teil der Steuergerät-Ausgangsgrößen Werte annehmen, die zumindest ein vorgegebenes Intervall des theoretisch möglichen Wertebereichs abdecken. Gemäß dieser Verfahrensweise wird darauf geachtet, dass ein bestimmter Wertebereich tatsächlich abgedeckt wird durch die Trainings-Eingangsvektoren und korrespondierenden Trainings-Ausgangsvektoren, sodass sichergestellt werden kann, dass in dem gewünschten Wertebereich auch tatsächlich Trainingsdaten vorliegen.

Vorzugsweise wird ein Intervall im Umfang von mindestens 70 % des theoretisch möglichen Wertebereichs abgedeckt, bevorzugt ein Intervall im Umfang von mindestens 80 % des theoretisch möglichen Wertebereichs und besonders bevorzugt ein Intervall im Umfang von mindestens 90 % des theoretisch möglichen Wertebereichs.

Vorzugsweise ist das künstliche neuronale Netzwerk implementiert mit einer Eingangsschicht mit wenigstens einer Anzahl von Eingangsneuronen entsprechend der Anzahl der dritten Steuergerät-Eingangsgrößen zur Einspeisung der interessierenden Steuergerät-Eingangsgrößen, mit einer Ausgangsschicht mit wenigstens einer Anzahl von Ausgangsneuronen entsprechend der Anzahl der dritten Steuergerät-Ausgangsgrößen zur Ausgabe der dritten Steuergerät-Ausgangsgrößen, wobei jedes Eingangsneuron mit wenigstens einem Neuron der Zwischenschicht über einen gerichteten und gewichteten Signalpfad verbunden ist und wobei wenigstens ein Neuron der Zwischenschicht über einen gerichteten und gewichteten Signalpfad mit dem Ausgangsneuron der Ausgangsschicht verbunden ist. Dies ist die übliche Struktur eines künstlichen neuronalen Netzwerks. Die Verbindungen zwischen den verschiedenen Schichten müssen jedenfalls so vollständig sein, dass es einen durchgängigen Signalpfad zwischen einem Eingangsneuron und einem Ausgangsneuron gibt, weil andernfalls die Einflussnahme von Eingangsgrößen auf Ausgangsgrößen nicht vorliegt. Vorzugsweise wird zunächst ein vollständig verbundenes neuronales Netzwerk trainiert, bei dem also jedes Eingangsneuron mit jedem Neuron der Zwischenschicht über gerichtete und gewichtete Signalpfade verbunden ist und wobei jedes Neuron der Zwischenschicht über einen gerichteten und gewichteten Signalpfad mit dem Ausgangsneuron der Ausgangsschicht verbunden ist.

Wie bereits ausgeführt, wird die eingangs hergeleitete Aufgabe ebenfalls gelöst durch ein Computerprogramm mit Anweisungen, die, wenn sie mit einem Computer zum Training eines künstlichen neuronalen Netzwerks oder einer Support-Vector-Machine ausgeführt werden, den Computer veranlassen, das zuvor beschriebene Verfahren auszuführen.

Im Einzelnen gibt es nun eine Vielzahl von Möglichkeiten, das erfindungsgemäße Verfahren und das erfindungsgemäße Computerprogramm auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: eine erste Variante eines erfindungsgemäßen computerimplementierten Verfahrens zur Herstellung eines für eine numerische Simulation geeigneten Software-Abbildes eines realen Steuergeräts,
- Fig. 2: eine weitere Variante eines erfindungsgemäßen computerimplementierten Verfahrens zur Herstellung eines für eine numerische Simulation geeigneten Software-Abbildes eines realen Steuergeräts und
- Fig. 3: ein künstliches neuronales Netzwerk als Software-Abbild eines realen Steuergeräts.

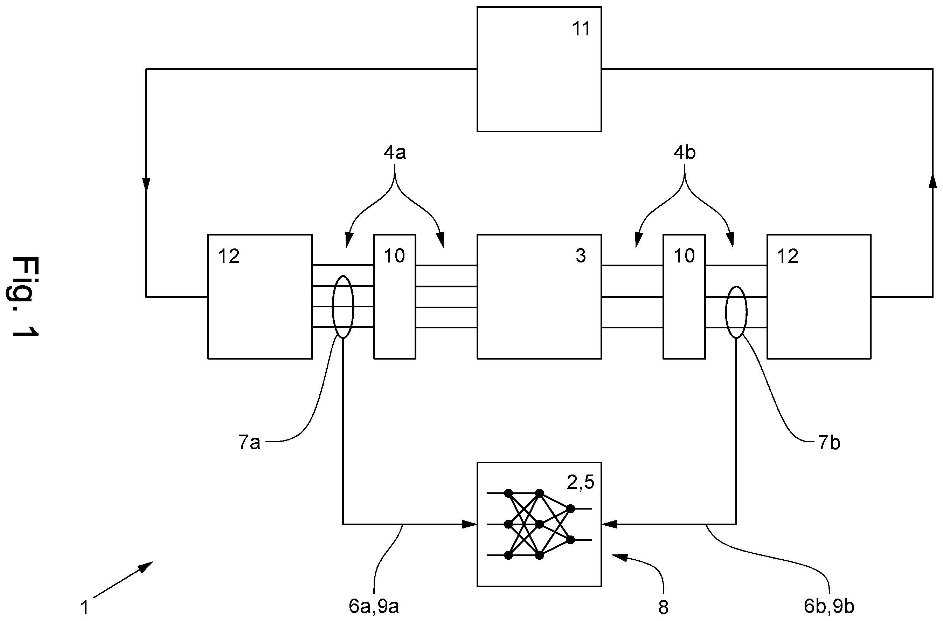

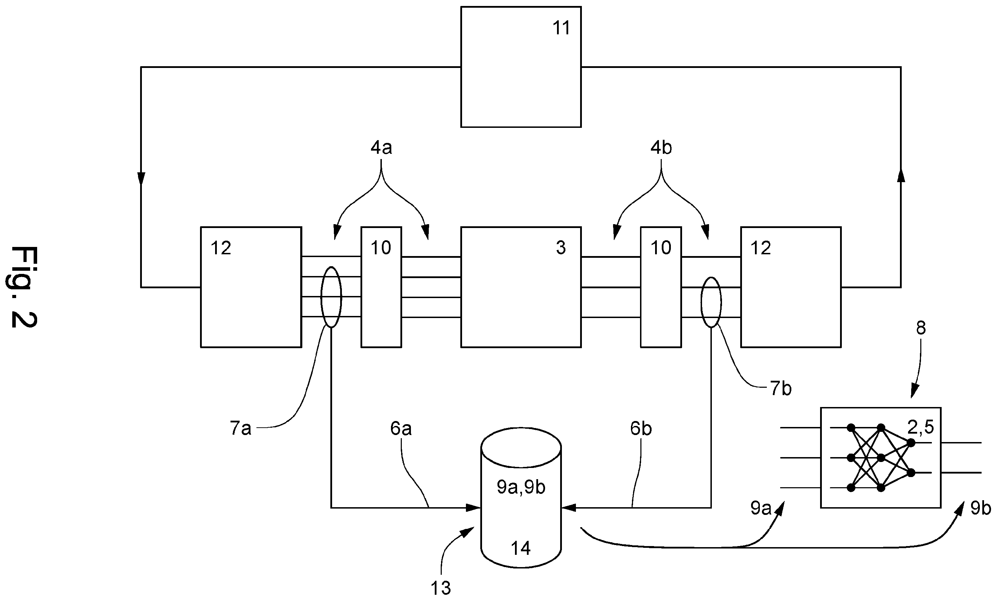

In den Fig. 1 und 2 ist jeweils dargestellt ein computerimplementiertes Verfahren 1 zur Herstellung eines für eine numerische Simulation geeigneten Software-Abbildes 2 zumindest eines Teils eines realen Steuergeräts 3, wobei das reale Steuergerät 3 im Betrieb einen Eingangsvektor von Steuergeräten-Eingangsgrößen 4a auf einen Ausgangsvektor von Steuergerät-Ausgangsgrößen 4b abbildet. Damit ist gemeint, dass das reale Steuergerät 3 aus den über seine I/O-Schnittstelle, die hier nicht separat dargestellt ist, empfangene Steuergerät-Eingangsgrößen 4a durch verschiedene Berechnungen Steuergerät-Ausgangsgrößen 4b ermittelt und ebenfalls wieder über seine I/O-Schnittstelle ausgibt. In diesem Sinne ist das Abbilden von Eingangsgrößen auf Ausgangsgrößen zu verstehen.

In den beiden Fig. 1 und 2 ist jeweils ein Anwendungsfall dargestellt, in dem das Steuergerät 3 an einen Hardware-in-the-Loop-Simulator angeschlossen ist. Der hier gegenständlich nicht im Einzelnen dargestellte Hardware-in-the-Loop-Simulator verfügt über eine oder mehrere Recheneinheiten und I/O-Schnittstellen 10. Auf den Recheneinheiten in Form von verschiedenen Prozessorboards wird das Umgebungsmodell 11 berechnet und die physikalischen Modellgrößen werden dann in die entsprechenden physikalischen Größen der Sensorsignale umgerechnet 12 bzw. die elektrischen physikalischen Signale werden in entsprechende Modellsignale des Umgebungsmodells 11 umgerechnet 12.

Wie den Fig. 1 und 2 zu entnehmen ist, wird hier nicht unterschieden - und muss auch nicht unterschieden werden - ob es sich bei den Steuergerät-Eingangsgrößen 4a und den Steuergerät-Ausgangsgrößen 4b um die tatsächlichen elektrischen Signale an den Eingangs-Pins bzw. den Ausgangs-Pins des realen Steuergeräts 3 selbst handelt oder um die entsprechende numerische Form dieser Steuergerät-Eingangsgrößen oder die numerische Form der entsprechenden Steuergerät-Ausgangsgrößen. In den in den Figuren dargestellten Ausführungsbeispielen wird unter den Steuergerät-Eingangsgrößen 4a und den Steuergerät-Ausgangsgrößen 4b jeweils das numerische Äquivalent der elektrischen Ein- und Ausgangsgrößen verstanden, was auch sinnvoll ist, da das Software-Abbild 2 im Rahmen einer numerischen Simulation die Funktionalität des realen Steuergeräts 3 abbildet, es wird also mit den entsprechenden numerischen Werten für die elektrischen Ein- und Ausgangsgrößen des realen Steuergeräts 3 umgegangen.

Beiden dargestellten Verfahren 1 ist jedenfalls gemeinsam, dass das Software-Abbild 2 durch ein künstliches neuronales Netzwerk 5 gebildet wird mit einem Eingangsvektor von Abbild-Eingangsgrößen 6a mit interessierenden Steuergerät-Eingangsgrößen 7a und mit einem Ausgangsvektor von Abbild-Ausgangsgrößen 6b mit interessierenden Steuergerät-Ausgangsgrößen 7b. In den Figuren ist jeweils dargestellt, dass der Eingangsvektor von Steuergerät-Eingangsgrößen 4a vier Signallinien umfasst, wohingegen von Interesse nur drei interessierende Steuergerät-Eingangsgrößen 7a sind, die als Abbild-Eingangsgrößen 6a verwendet werden. Entsprechend verhält es sich mit den interessierenden Steuergerät-Ausgangsgrößen 7b, die als Abbild-Ausgangsgrößen 6b verwendet werden.

Das Software-Abbild 2 wird mittels überwachten Lernens trainiert 8 und zwar mit einer Mehrzahl von Trainings-Eingangsvektoren 9a der interessierenden Steuergerät-Eingangsgrößen 7a und mit einer Mehrzahl von korrespondierenden Trainings-Ausgangsvektoren 9b der interessierenden Steuergerät-Ausgangsgrößen 7b. Das vielfach bestehende Problem beim Training von Software-Abbildern, die durch ein künstliches neuronales Netzwerk oder durch eine Support-Vector-Machine gebildet werden, dass nicht in ausreichendem Maße qualitativ hochwertige Trainingsdaten zur Verfügung stehen, besteht im vorliegenden Fall nicht, da ja ein reales Steuergerät 3 vorhanden ist, mit dessen Hilfe im realen Betrieb eine vollkommen ausreichende und praktische unerschöpfliche Anzahl von Trainings-Vektoren 9 erzeugt werden kann. Jedenfalls werden die benötigten Trainings-Eingangsvektoren 9a und die korrespondierenden Trainings-Ausgangsvektoren 9b aus dem Betrieb des realen Steuergeräts 3 gewonnen, also aus den Steuergerät-Eingangsgrößen 4a und den Steuergerät-Ausgangsgrößen 4b. Durch das Training 8 des Software-Abbildes 2 wird ein Verhaltensabbild der interessierenden Funktionalität des realen Steuergeräts 3 erzielt.

Der hier nicht dargestellte Fall des Trainings 8 des Software-Abbildes 2 mittels bestärkenden Lernens unterscheidet sich von dem Fall des überwachten Lernens dadurch, dass nicht zwingend ein Trainings-Ausgangsvektor 9b bestimmt und zum Training 8 des Software-Abbildes 2 herangezogen werden muss - aber herangezogen werden könnte -.

In Fig. 1 ist dargestellt, dass das Software-Abbild 2 mittels überwachten Lernens während des Betriebs des realen Steuergeräts 3 trainiert wird mit während dieses Betriebs des realen Steuergeräts 3 gewonnener Trainings-Eingangsvektoren 9a und korrespondierender Trainings-Ausgangsvektoren 9b, wobei der Betrieb des realen Steuergeräts 3 im Rahmen einer Hardware-in-the-Loop-Simulation stattfindet. In Fig. 1 ist also der "online"-Fall des Verfahrens 1 dargestellt. Hier wird erst dann ein neues Paar von Eingangs-Vektor von Steuergerät-Eingangsgrößen 4a und Ausgangsvektor von Steuergerät-Ausgangsgrößen 4b als Trainings-Eingangsvektor 9a und korrespondierender Trainings-Ausgangsvektor 9b für das Training des Software-Abbildes 2 herangezogen, wenn das Training 8 des Software-Abbildes 2 mit dem letzten Paar für das Training 8 herangezogenem Trainings-Eingangsvektor 9a und korrespondierendem Trainings-Ausgangsvektor 9b beendet ist. Zwischenzeitlich angefallene Paare von Eingangsvektor von Steuergerät-Eingangsgrößen 4a und Ausgangsvektor von Steuergerät-Ausgangsgrößen 4b werden für das Training 8 fallen gelassen. Auf diese Art und Weise wird das Software-Abbild 2 so schnell wie möglich mit neuen Trainingsdaten versorgt, aber nicht schneller als möglich im Rahmen des "online"-Anwendungsfalls.

In Fig. 2 ist dargestellt, dass das Verfahren 1 so betrieben wird, dass eine Mehrzahl von Paaren von Eingangsvektor von Steuergerät-Eingangsgrößen 4a und korrespondierendem Ausgangsvektor von Steuergerät-Ausgangsgrößen 4b während des Betriebs des realen Steuergeräts 3 aufgezeichnet 13 wird, und zwar mittels eines dafür vorgesehenen Datenspeichers 14. Das Training 8 des Software-Abbildes 2 wird unabhängig vom Betrieb des realen Steuergeräts 3 durchgeführt mit Paaren von Trainings-Eingangsvektor 9a und korrespondierendem Trainings-Ausgangsvektor 9b, die aus den aufgezeichneten Paaren von Eingangsvektor von Steuergerät-Eingangsgrößen 4a und korrespondierendem Ausgangsvektor von Steuergerät-Ausgangsgrößen 4b gewonnen werden. Dies ist der sogenannte "offline"-Fall, bei dem keine Notwendigkeit besteht, das Training 8 des Software-Abbildes 2 zeitgleich zu dem Betrieb des realen Steuergeräts 2 durchzuführen.

Bei den Ausführungsbeispielen gemäß den Fig. 1 und 2 handelt es sich bei dem realen Steuergerät 3 um ein deterministisches Abtastsystem mit äquidistanten Abtastpunkten. Das Training 8 des Software-Abbildes 2 des realen Steuergeräts 3 erfolgt jeweils mit Paaren von Trainings-Eingangsvektor 9a und korrespondierendem Trainings-Ausgangsvektor 9b, die aus zeitlich äquidistant aufeinander folgenden Paaren von Eingangsvektor von Steuergerät-Eingangsgrößen 4a und korrespondierendem Ausgangsvektor von Steuergerät-Ausgangsgrößen 4b gewonnen werden. Im Falle von Fig. 2, wo ein Training 8 des Software-Abbildes 2 nicht in Echtzeit erfolgen muss, erfolgt das Training 8 mit einer Reihe von mehreren Paaren von Trainings-Eingangsvektor 9a und korrespondierendem Trainings-Ausgangsvektor 9b, die aus zeitlich lückenlos aufeinander folgenden Paaren von Eingangsvektor von Steuergerät-Eingangsgrößen 4a und korrespondierendem Ausgangsvektor von Steuergerät-Ausgangsgrößen 4b gewonnen werden.

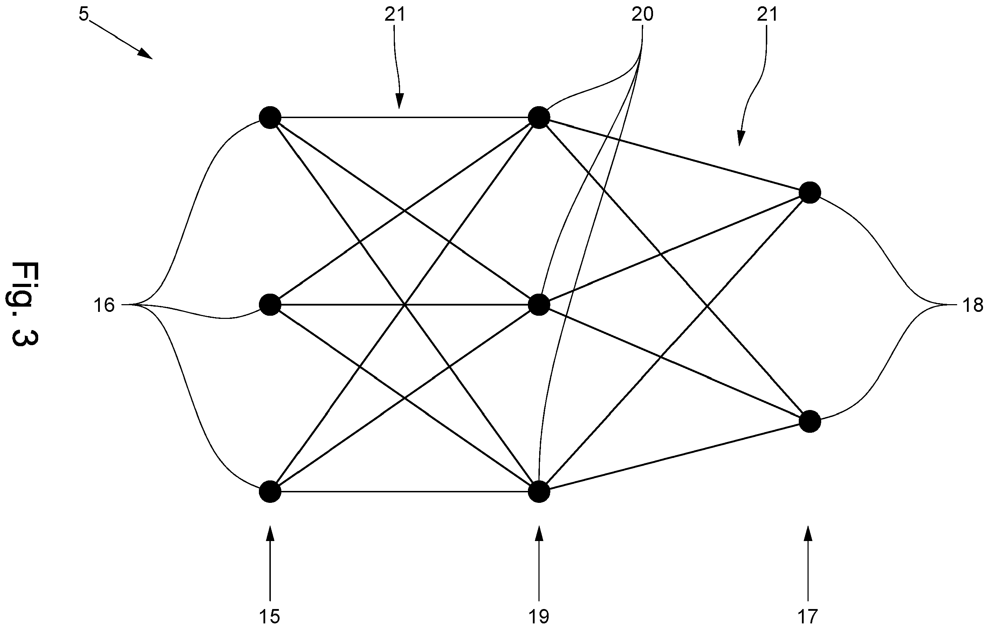

In Fig. 3 ist schließlich dargestellt, wie das künstliche neuronale Netzwerk 5 in den Ausführungsbeispielen 1 und 2 implementiert ist, nämlich mit einer Eingangsschicht 15 mit wenigstens einer Anzahl - hier drei - von Eingangsneuronen 16 entsprechend der Anzahl der interessierenden Steuergerät-Eingangsgrößen 7a zur Einspeisung der interessierenden Steuergerät-Eingangsgrößen 7a. Das künstliche neuronale Netzwerk 5 weist ferner eine Ausgangsschicht 17 auf mit einer Anzahl von Ausgangsneuronen 18 - hier zwei - entsprechend der Anzahl der interessierenden Steuergerät-Ausgangsgrößen 7b zur Ausgabe der interessierenden Steuergerät-Ausgangsgrößen 7b. Es ist ferner eine Zwischenschicht 19 mit drei Neuronen 20 vorgesehen, wobei im vorliegenden Fall jedes Eingangsneuron 16 mit jedem Neuron 20 der Zwischenschicht 19 über gerichtete und gewichtete Signalpfade 21 verbunden ist, wobei die Wichtungen der Signalpfade durch nicht im Einzelnen dargestellte Multiplikatoren im Signalpfad realisiert sind. Ferner ist jedes Neuron 20 der Zwischenschicht 19 über einen gerichteten und gewichteten Signalpfad 21 mit beiden Ausgangsneuronen 18 der Ausgangsschicht 17 verbunden. Das Training 8 des künstlichen neuronalen Netzwerks 5 besteht in der Anpassung der Multiplikatoren der gewichteten Signalpfade 21 zwischen den verschiedenen Schichten 15, 17, 19 des künstlichen neuronalen Netzwerks 5.

### Bezugszeichen

- 1: Verfahren
- 2: Software-Abbild
- 3: reales Steuergerät
- 4a: Steuergerät-Eingangsgröße
- 4b: Steuergerät-Ausgangsgröße
- 5: künstliches neuronales Netzwerk
- 6a: Abbild-Eingangsgröße
- 6b: Abbild-Ausgangsgröße
- 7a: interessierende Steuergerät-Eingangsgröße
- 7b: interessierende Steuergerät-Ausgangsgröße
- 8: Trainieren des Software-Abbildes
- 9a: Trainings-Eingangsvektor
- 9b: Trainings-Ausgangsvektor
- 10: I/O-Schnittstellen eines Hardware-in-the-Loop-Simulators
- 11: Umgebungsmodell
- 12: Umrechnung Modellsignale / physikalische Signal
- 13: Aufzeichnung von Trainingsvektoren
- 14: Datenspeicher
- 15: Eingangsschicht des künstlichen neuronalen Netzwerks
- 16: Eingangsneuronen
- 17: Ausgangsschicht des künstlichen neuronalen Netzwerks
- 18: Ausgangsneuronen
- 19: Zwischenschicht des künstlichen neuronalen Netzwerks
- 20: Neuronen der Zwischenschicht
- 21: gerichtete und gewichtete Signalpfade

## Patentansprüche

1. Computerimplementiertes Verfahren (1) zur Herstellung eines für eine numerische Simulation geeigneten Software-Abbildes (2) zumindest eines Teils eines realen Steuergeräts (3),
wobei das reale Steuergerät (3) im Betrieb einen Eingangsvektor von ersten Steuergerät-Eingangsgrößen (4a) auf einen Ausgangsvektor von ersten Steuergerät-Ausgangsgrößen (4b) abbildet,
wobei das Software-Abbild (2) im Rahmen einer numerischen Simulation die Funktionalität des realen Steuergeräts (3) abbildet,
wobei das Software-Abbild (2) durch ein künstliches neuronales Netzwerk (5) oder durch eine Support-Vector-Machine gebildet wird,
wobei das Software-Abbild (2) einen Eingangsvektor von zweiten Abbild-Eingangsgrößen (6a) und einen Ausgangsvektor von zweiten Abbild-Ausgangsgrößen (6b) umfasst,
wobei der Eingangsvektor von ersten Steuergerät-Eingangsgrößen (4a) dritte Steuergerät-Eingangsgrößen (7a) umfasst, die als zweite Abbild-Eingangsgrößen (6a) verwendet werden, und der Ausgangsvektor von ersten Steuergerät-Ausgangsgrößen (4b) dritte Steuergerät-Ausgangsgrößen (7b) umfasst, die als zweite Abbild-Ausgangsgrößen (6b) verwendet werden,
wobei das Software-Abbild (2) mittels überwachten Lernens oder mittels bestärkenden Lernens trainiert (8) wird mit einer Mehrzahl von Trainings-Eingangsvektoren (9a) der dritten Steuergerät-Eingangsgrößen (7a) und mit einer Mehrzahl von korrespondierenden Trainings-Ausgangsvektoren (9b) der dritten Steuergerät-Ausgangsgrößen (7b),
wobei die Trainings-Eingangsvektoren (9a) und die korrespondierenden Trainings-Ausgangsvektoren (9b) aus den ersten Steuergerät-Eingangsgrößen (4a) und den ersten Steuergerät-Ausgangsgrößen (4b) während des realen Betriebs des realen Steuergeräts (3) erzeugt werden,
**dadurch gekennzeichnet,**
**dass** das Software-Abbild (2) mittels überwachten Lernens oder mittels bestärkenden Lernens während des Betriebs des realen Steuergeräts (3) trainiert (8) wird mit während dieses Betriebs des realen Steuergeräts (3) gewonnener Trainings-Eingangsvektoren (9a) und korrespondierender Trainings-Ausgangsvektoren (9b),
und **dass** erst dann ein neues Paar von Eingangsvektor von ersten Steuergerät-Eingangsgrößen (4a) und Ausgangsvektor von ersten Steuergerät-Ausgangsgrößen (4b) als Trainings-Eingangsvektor (9a) und korrespondierender Trainings-Ausgangsvektor (9b) für das Training (8) des Software-Abbildes (2) herangezogen wird, wenn das Training (8) des Software-Abbildes (2) mit dem letzten Paar für das Training (8) herangezogenem Trainings-Eingangsvektor (9a) und korrespondierendem Trainings-Ausgangsvektor (9b) beendet ist und zwischenzeitlich angefallene Paare von Eingangsvektor von ersten Steuergerät-Eingangsgrößen (4a) und Ausgangsvektor von ersten Steuergerät-Ausgangsgrößen (4b) fallengelassen werden.

2. Verfahren (1) nach Anspruch 1, **dadurch gekennzeichnet, dass** der Betrieb des realen Steuergeräts (3) im Rahmen einer Hardwarein-the-Loop-Simulation stattfindet.

3. Verfahren (1) nach Anspruch 1, **dadurch gekennzeichnet, dass** eine Mehrzahl von Paaren von Eingangsvektor von ersten Steuergerät-Eingangsgrößen (4a) und korrespondierendem Ausgangsvektor von ersten Steuergerät-Ausgangsgrößen (4b) während des Betriebs des realen Steuergeräts (3) aufgezeichnet (13) werden und das Training (8) des Software-Abbildes (2) unabhängig vom Betrieb des realen Steuergeräts (3) erfolgt mit Paaren von Trainings-Eingangsvektor (9a) und korrespondierendem Trainings-Ausgangsvektor (9b), die aus den aufgezeichneten Paaren von Eingangsvektor von ersten Steuergerät-Eingangsgrößen (4a) und korrespondierendem Ausgangsvektor von ersten Steuergerät-Ausgangsgrößen (4b) gewonnen werden.

4. Verfahren (1) nach einem der Ansprüche 1 bis 3, **dadurch gekennzeichnet, dass** das Training (8) des Software-Abbildes (2) des realen Steuergeräts (3) erfolgt mit Paaren von Trainings-Eingangsvektor (9a) und korrespondierendem Trainings-Ausgangsvektor (9b), die aus zeitlich äquidistant aufeinanderfolgenden Paaren von Eingangsvektor von ersten Steuergerät-Eingangsgrößen (4a) und korrespondierendem Ausgangsvektor von ersten Steuergerät-Ausgangsgrößen (4b) gewonnen werden, insbesondere mit einer Reihe von mehreren Paaren von Trainings-Eingangsvektor (9a) und korrespondierendem Trainings-Ausgangsvektor (9b), die aus zeitlich lückenlos aufeinanderfolgenden Paaren von Eingangsvektor von ersten Steuergerät-Eingangsgrößen (4a) und korrespondierendem Ausgangsvektor von ersten Steuergerät-Ausgangsgrößen (4b) gewonnen werden.

5. Verfahren (1) nach einem der Ansprüche 1 bis 4, **dadurch gekennzeichnet, dass** die aus dem Betrieb des realen Steuergeräts (3) gewonnen Trainings-Eingangsvektoren (9a) und die korrespondierenden Trainings-Ausgangsvektoren (9b) in einem Auswahlschritt auf Grundlage eines Auswahlkriteriums für das Training (8) des Software-Abbildes (2) zugelassen oder verworfen werden.

6. Verfahren (1) nach Anspruch 5, **dadurch gekennzeichnet, dass** das Auswahlkriterium in einem vorgegebenen Wertebereich für zumindest einen Teil der dritten Steuergerät-Eingangsgrößen (7a) und/oder einen Teil der dritten Steuergerät-Ausgangsgrößen (7b) besteht.

7. Verfahren (1) nach einem der Ansprüche 1 bis 6, **dadurch gekennzeichnet, dass** der Betrieb des realen Steuergeräts zur Gewinnung der Trainings-Eingangsvektoren (9a) und der korrespondierenden Trainings-Ausgangsvektoren (9b) so durchgeführt wird, dass zumindest ein Teil der ersten Steuergerät-Eingangsgrößen (4a) und zumindest ein Teil der ersten Steuergerät-Ausgangsgrößen (4b) Werte annehmen, die zumindest ein vorgegebenes Intervall des theoretisch möglichen Wertebereichs abdecken, insbesondere ein Intervall im Umfang von mindestens 70 % des theoretisch möglichen Wertebereichs abdecken, bevorzugt ein Intervall im Umfang von mindestens 80 % des theoretisch möglichen Wertebereichs abdecken und besonders bevorzugt ein Intervall im Umfang von mindestens 90 % des theoretisch möglichen Wertebereichs abdecken.

8. Verfahren (1) nach einem der Ansprüche 1 bis 7, **dadurch gekennzeichnet, dass** das künstliche neuronale Netzwerk (5) implementiert ist mit einer Eingangsschicht (15) mit wenigstens einer Anzahl von Eingangsneuronen (16) entsprechend der Anzahl der dritten Steuergerät-Eingangsgrößen (7a) zur Einspeisung der dritten Steuergerät-Eingangsgrößen (7a), mit einer Ausgangsschicht (17) mit wenigstens einer Anzahl von Ausgangsneuronen (18) entsprechend der Anzahl der dritten Steuergerät-Ausgangsgrößen (7b) zur Ausgabe der dritten Steuergerät-Ausgangsgrößen (7b), und mit mindestens einer Zwischenschicht (19) mit mindestens zwei Neuronen (20), wobei jedes Eingangsneuron (16) mit zumindest einem Neuron der Zwischenschicht (19) über gerichtete und gewichtete Signalpfade (21) verbunden ist und wobei jedes Neuron der Zwischenschicht (19) über einen gerichteten und gewichteten Signalpfad (21) mit zumindest einem Ausgangsneuron (18) der Ausgangsschicht (17) verbunden ist.

9. Computerprogramm mit Anweisungen, die, wenn sie mit einem Computer zum Training eines künstlichen neuronalen Netzwerks (5) werden, den Computer veranlassen, das Verfahren (1) gemäß einem der Ansprüche 1 bis 8 auszuführen.

## Claims

1. A computer-implemented method (1) for generating a software model (2) suitable for numerical simulation of at least a portion of a real control unit (3),
wherein the real control unit (3), during operation, maps an input vector of first control unit input variables (4a) to an output vector of first control unit output variables (4b),
wherein the software model (2) replicates the functionality of the real control unit (3) within the context of a numerical simulation,
wherein the software model (2) is formed by an artificial neural network (5) or by a support vector machine,
wherein the software model (2) comprises an input vector of second model input variables (6a) and an output vector of second model output variables (6b),
wherein the input vector of first control unit input variables (4a) comprises third control unit input variables (7a), which are used as second map input variables (6a), and the output vector comprises first control unit output variables (4b) and third control unit output variables (7b), which are used as second map output variables (6b),
wherein the software model (2) is trained (8) by means of supervised learning or by means of reinforcement learning using a plurality of training input vectors (9a) of the third control unit input quantities (7a) and with a plurality of corresponding training output vectors (9b) of the third control unit output variables (7b),
wherein the training input vectors (9a) and the corresponding training output vectors (9b) are generated from the first control unit input variables (4a) and the first control unit output variables (4b) during the actual operation of the actual control unit (3),
**characterized in**
**that** the software image (2) is trained (8) by means of supervised learning or by means of reinforcement learning during the operation of the real control unit (3) using training input vectors (9a) and corresponding training output vectors (9b) obtained during this operation of the real control unit (3),
and **that** only then is a new pair consisting of an input vector of first control unit input variables (4a) and an output vector of first control unit output variables (4b) used as a training input vector (9a) and a corresponding training output vector (9b) for the training (8) of the software model (2) only when the training (8) of the software image (2) using the last pair of training input vector (9a) and the corresponding training output vector (9b) used for the training (8) of the software image (2) is completed, and pairs of input vectors from first control unit input variables (4a) and output vectors from first control unit output variables (4b) that have been generated in the meantime are discarded.

2. Method (1) according to claim 1, **characterized in that** the operation of the real control unit (3) takes place within the framework of a hardware-in-the-loop simulation.

3. Method (1) according to claim 1, **characterized in that** a plurality of pairs of input vectors of first control unit input variables (4a) and corresponding output vectors of first control unit output variables (4b) are recorded (13) during the operation of the real control unit (3), and the training (8) of the software model (2) is performed independently of the operation of the real control unit (3) using pairs of training input vectors (9a) and corresponding training output vectors (9b), which are derived from the recorded pairs of input vectors of first control unit input quantities (4a) and corresponding output vectors of first control unit output quantities (4b).

4. Method (1) according to any one of claims 1 through 3, **characterized in that** the training (8) of the software model (2) of the actual control unit (3) is performed using pairs of training input vectors (9a) and corresponding training output vectors (9b), which are obtained from temporally equidistant successive pairs of input vectors of first control unit input variables (4a) and corresponding output vectors of first control unit output variables (4b), in particular with a series of several pairs of training input vectors (9a) and corresponding training output vectors (9b), which are obtained from pairs of input vectors of first control unit input variables (4a) and corresponding output vectors of first control unit output variables (4b) that follow one another without any time gaps.

5. Method (1) according to any one of claims 1 through 4, **characterized in that** the training input vectors (9a) and the corresponding training output vectors (9b) are accepted or rejected in a selection step based on a selection criterion for the training (8) of the software model (2).

6. The method (1) according to claim 5, **characterized in that** the selection criterion consists of a predetermined range of values for at least a portion of the third control unit input variables (7a) and/or a portion of the third control unit output variables (7b).

7. Method (1) according to any one of claims 1 through 6, **characterized in that** the operation of the real control unit for obtaining the training input vectors (9a) and the corresponding training output vectors (9b) is carried out such that at least a portion of the first control unit input variables (4a) and at least a portion of the first control unit output variables (4b) assume values that cover at least a predetermined interval of the theoretically possible range of values, in particular, covering an interval comprising at least 70% of the theoretically possible range of values, preferably covering an interval comprising at least 80% of the theoretically possible range of values, and most preferably covering an interval comprising at least 90% of the theoretically possible range of values.

8. Method (1) according to any one of claims 1 through 7, **characterized in that** the artificial neural network (5) is implemented with an input layer (15) having at least a number of input neurons (16) corresponding to the number of third control unit input variables (7a) for feeding in the third control unit input variables (7a), an output layer (17) with at least a number of output neurons (18) corresponding to the number of third control unit output variables (7b) for outputting the third control unit output variables (7b), and comprising at least one hidden layer (19) with at least two neurons (20), wherein each input neuron (16) is connected to at least one neuron of the hidden layer (19) via directed and weighted signal paths (21), and wherein each neuron of the intermediate layer (19) is connected via a directed and weighted signal path (21) to at least one output neuron (18) of the output layer (17).

9. A computer program comprising instructions which, when executed by a computer to train an artificial neural network (5), cause the computer to perform the method (1) according to one of claims 1 through 8.

## Revendications

1. Procédé mis en œuvre par ordinateur (1) destiné à la création d'une représentation logicielle (2), adaptée à une simulation numérique, d'au moins une partie d'une unité de commande réelle (3),
dans lequel l'unité de commande réelle (3), en fonctionnement, mappe un vecteur d'entrée constitué de premières grandeurs d'entrée de l'unité de commande (4a) sur un vecteur de sortie constitué de premières grandeurs de sortie de l'unité de commande (4b),
représentation logicielle (2) reproduisant, dans le cadre d'une simulation numérique, la fonctionnalité de l'unité de commande réelle (3),
la représentation logicielle (2) étant constituée d'un réseau neuronal artificiel (5) ou d'une machine à vecteurs de support,
la représentation logicielle (2) comprenant un vecteur d'entrée constitué de deuxièmes grandeurs d'entrée de la représentation (6a) et un vecteur de sortie constitué de deuxièmes grandeurs de sortie de la représentation (6b),
le vecteur d'entrée de premières grandeurs d'entrée de l'unité de commande (4a) comprenant des troisièmes grandeurs d'entrée de l'unité de commande (7a) qui sont utilisées comme deuxièmes grandeurs d'entrée de la représentation (6a), et le vecteur de sortie des premières grandeurs de sortie de l'unité de commande (4b) comprend des troisièmes grandeurs de sortie de l'unité de commande (7b), qui sont utilisées comme deuxièmes grandeurs de sortie de la représentation (6b),
la représentation logicielle (2) étant entraînée (8) au moyen d'un apprentissage supervisé ou d'un apprentissage par renforcement avec une pluralité de vecteurs d'entrée d'entraînement (9a) correspondant aux troisièmes grandeurs d'entrée de l'unité de commande (7a) et à l'aide d'une pluralité de vecteurs de sortie d'entraînement correspondants (9b) des troisièmes grandeurs de sortie de l'unité de commande(7b),
les vecteurs d'entrée d'entraînement (9a) et les vecteurs de sortie d'entraînement correspondants (9b) sont générés à partir des premières grandeurs d'entrée de l'unité de commande (4a) et des premières grandeurs de sortie de l'unité de commande (4b) pendant le fonctionnement réel de l'unité de commande réelle (3),
**caractérisé en ce**
**que** la représentation logicielle (2) est entraînée (8) au moyen d'un apprentissage supervisé ou d'un apprentissage par renforcement pendant le fonctionnement de l'unité de commande réelle (3) à l'aide de vecteurs d'entrée d'entraînement (9a) et de vecteurs de sortie d'entraînement (9b) correspondants obtenus pendant ce fonctionnement de l'unité de commande réelle (3),
et en ce que ce n'est qu'alors qu'une nouvelle paire composée d'un vecteur d'entrée issu des premières grandeurs d'entrée de l'unité de commande (4a) et d'un vecteur de sortie issu des premières grandeurs de sortie de l'unité de commande (4b) est utilisée comme vecteur d'entrée d'entraînement (9a) et vecteur de sortie d'entraînement correspondant (9b) pour l'entraînement (8) de la représentation logicielle (2), lorsque l'entraînement (8) de la représentation logicielle (2) est terminé avec la dernière paire de vecteur d'entrée d'entraînement (9a) et du vecteur de sortie d'entraînement correspondant (9b) utilisés pour l'entraînement (8), et les paires de vecteurs d'entrée issues des premières grandeurs d'entrée de l'unité de commande (4a) et de vecteurs de sortie issues des premières grandeurs de sortie de l'unité de commande (4b) accumulées entre-temps sont ignorées.

2. Procédé (1) selon la revendication 1, **caractérisé en ce que** le fonctionnement de l'unité de commande réelle (3) s'effectue dans le cadre d'une simulation « hardware-in-the-loop ».

3. Procédé (1) selon la revendication 1, **caractérisé en ce qu'**une pluralité de paires composées d'un vecteur d'entrée correspondant à des premières grandeurs d'entrée de l'unité de commande (4a) et d'un vecteur de sortie correspondant à des premières grandeurs de sortie de l'unité de commande (4b) sont enregistrées (13) pendant le fonctionnement de l'unité de commande réelle (3) et que l'entraînement (8) de la représentation logicielle (2) s'effectue indépendamment du fonctionnement de l'unité de commande réelle (3) à l'aide de paires de vecteurs d'entrée d'entraînement (9a) et de vecteur de sortie d'entraînement correspondant (9b), qui sont obtenus à partir des paires enregistrées de vecteur d'entrée correspondant aux premières grandeurs d'entrée de l'unité de commande (4a) et de vecteur de sortie correspondant aux premières grandeurs de sortie de l'unité de commande (4b).

4. Procédé (1) selon l'une des revendications 1 à 3, **caractérisé en ce que** l'entraînement (8) de la représentation logicielle (2) de l'unité de commande réelle (3) s'effectue à l'aide de paires de vecteurs d'entrée d'entraînement (9a) et de vecteurs de sortie d'entraînement correspondants (9b), qui sont obtenus à partir de paires successives et équidistantes dans le temps de vecteurs d'entrée correspondant aux premières grandeurs d'entrée de l'unité de commande (4a) et de vecteurs de sortie correspondants des premières grandeurs de sortie de l'unité de commande (4b), en particulier à l'aide d'une série de plusieurs paires de vecteurs d'entrée d'entraînement (9a) et de vecteurs de sortie d'entraînement correspondants (9b), qui sont obtenus à partir de paires successives sans interruption temporelle de vecteurs d'entrée correspondant aux premières grandeurs d'entrée de l'unité de commande (4a) et de vecteurs de sortie correspondants correspondant aux premières grandeurs de sortie de l'unité de commande (4b).

5. Procédé (1) selon l'une des revendications 1 à 4, **caractérisé en ce que** les vecteurs d'entrée d'entraînement (9a) et les vecteurs de sortie d'entraînement correspondants (9b) sont acceptés ou rejetés au cours d'une étape de sélection sur la base d'un critère de sélection pour l'entraînement (8) de la représentation logicielle (2).

6. Procédé (1) selon la revendication 5, **caractérisé en ce que** le critère de sélection consiste en une plage de valeurs prédéfinie pour au moins une partie des troisièmes grandeurs d'entrée de l'unité de commande (7a) et/ou une partie des troisièmes grandeurs de sortie de l'unité de commande (7b).

7. Procédé (1) selon l'une des revendications 1 à 6, **caractérisé en ce que** le fonctionnement de l'unité de commande réelle pour l'obtention des vecteurs d'entrée d'entraînement (9a) et des vecteurs de sortie d'entraînement correspondants (9b) est effectué de telle sorte qu'au moins une partie des premières grandeurs d'entrée l'unité de commande (4a) et au moins une partie des premières grandeurs de sortie du l'unité de commande (4b) prennent des valeurs couvrant au moins un intervalle prédéfini de la plage de valeurs théoriquement possible, en particulier un intervalle couvrant au moins 70 % de la plage de valeurs théoriquement possible, de préférence un intervalle couvrant au moins 80 % de la plage de valeurs théoriquement possible et, de manière particulièrement préférée, un intervalle couvrant au moins 90 % de la plage de valeurs théoriquement possible.

8. Procédé (1) selon l'une des revendications 1 à 7, **caractérisé en ce que** le réseau neuronal artificiel (5) est mis en œuvre avec une couche d'entrée (15) comportant au moins un nombre de neurones d'entrée (16) correspondant au nombre de grandeurs d'entrée de la troisième unité de commande (7a) pour l'injection des grandeurs d'entrée de la troisième unité de commande (7a), d'une couche de sortie (17) comportant au moins un nombre de neurones de sortie (18) correspondant au nombre de grandeurs de sortie de la troisième unité de commande (7b) pour délivrer les grandeurs de sortie de la troisième unité de commande (7b), et comportant au moins une couche intermédiaire (19) comprenant au moins deux neurones (20), chaque neurone d'entrée (16) étant relié à au moins un neurone de la couche intermédiaire (19) par l'intermédiaire de chemins de signal orientés et pondérés (21) et chaque neurone de la couche intermédiaire (19) étant relié, par l'intermédiaire d'un chemin de signal orienté et pondéré (21), à au moins un neurone de sortie (18) de la couche de sortie (17).

9. Programme informatique comprenant des instructions qui, lorsqu'elles sont exécutées par un ordinateur pour l'entraînement d'un réseau neuronal artificiel (5), amènent l'ordinateur à mettre en œuvre le procédé (1) selon l'une des revendications 1 à 8.
